# EUROPÄISCHE PATENTSCHRIFT

(11) **EP 1 274 951 B1**
(45) Veröffentlichungstag und Bekanntmachung des Hinweises auf die Patenterteilung: **22.12.2004**
(21) Anmeldenummer: 01925484.6
(22) Anmeldetag: 17.03.2001
(51) Int. Cl.: F16H 49/00

(54) **WELLGETRIEBE MIT KUPPLUNG UND TRIEBKERN FÜR EIN SOLCHES WELLGETRIEBE**
HARMONIC DRIVE COMPRISING A COUPLING AND A DRIVING CORE FOR A HARMONIC DRIVE OF THIS TYPE
TRANSMISSION A DEMULTIPLICATION HARMONIQUE, EMBRAYAGE ET NOYAU D'ENTRAINEMENT POUR TRANSMISSION A DEMULTIPLICATION HARMONIQUE DE CE TYPE

(30) Priorität: 20.04.2000 DE 10019577
(43) Veröffentlichungstag der Anmeldung: 15.01.2003
(73) Patentinhaber: Oechsler Aktiengesellschaft, 91522 Ansbach (DE)
(72) Erfinder: POEHLAU, Frank, 90762 Fuerth (DE)
(86) Internationale Anmeldenummer: PCT/EP2001/003090
(87) Internationale Veröffentlichungsnummer: WO 2001/081793

(56) Entgegenhaltungen:
- DE-A- 19 735 052
- US-A- 3 187 862

## Beschreibung

Die Erfindung betrifft ein Wellgetriebe mit Kupplung und einen Triebkem dafür, gemäß dem Oberbegriff des jeweiligen Hauptanspruches.

Die Funktion eines - auch als Harmonic Drive oder als Ringband-Getriebe bekannten - Wellgetriebes als sehr stark untersetzendem, selbsthemmendem System mit zur Antriebswelle koaxialer Abtriebswelle beruht darauf, daß ein rotierender sogenannter Well-Generator einen auch als Flexband bezeichneten Innenrad-Reifen umlaufend radial verformt und dadurch dessen Außenmantelfläche umlaufend lokal nach außen gegen die hohlzylindrische Innenmantelfläche geringfügig größeren Umfanges eines stationären, formstabilen Stützrings andrückt. Infolgedessen wälzt sich das Innenrad selbst oder sein darauf verdrehbar gelagerter Radreifen kraftschlüssig über Reibflächen oder formschlüssig über Verzahnungen im Stützring ab, so daß das Rad bzw. sein Reifen sich nach Maßgabe der Umfangsdifferenz langsamer als der motorisch angetriebene Triebkern des Wellgenerators dreht. Diese gegenüber dem Antrieb stark verlangsamte Drehbewegung wird vorzugsweise über die Außenverzahnung des Radreifens auf die Innenverzahnung eines weiteren hohlzylindrischen Außenringes, des zum Stützring konzentrischen aber nicht stationären Abtriebsringes übertragen. Der Antrieb des Well-Generators erfolgt üblicherweise über einen koaxial angeflanschten hochtourigen (und deshalb preiswerten) Kleinspannungs-Gleichstrommotor, dessen Rotation so in eine sehr viel langsamere Drehbewegung entsprechend größeren Drehmomentes untersetzt wird. Einsatz findet eine solche Motor-Getriebe-Kombination insbesondere bei elektromechanischen Verstelleinrichtungen im Kraftfahrzeug. Wenn es die Anwendung erfordert, daß die Kraftübertra-. gung über dieses Getriebe unterbrochen werden kann, dann wird ihm eine Leerlauf-Schaltkupplung in der Antriebswelle vor- oder in der Abtriebswelle nachgeschaltet, was aber infolge zusätzlicher verschleißanfälliger Funktionsteile und größeren Raumbedarfs grundsätzlich nachteilig ist.

Bei den vom insoweit gattungsbildenden Deutschen Gebrauchsmuster 2 96 14 738 bekannten und in dem Beitrag "Genial einfach" von H. Hirn (KEM Antriebstechnik Heft 11/1996) näher beschriebenen Ausführungsformen solcher Wellgetriebe wird als Wellgenerator ein unrunder (im Axial-Querschnitt etwa dreieckförmiger oder bevorzugt ovaler) Triebkern konzentrisch in der Nabe des radial verformbaren Innenrades gedreht. Als radial orientierte Stößel wirkende, formstabile Speichen zwischen der vom Triebkern radial verformten Nabe und dem ebenfalls radial verformbaren, außen verzahnten Reifen dieses Innenrades bewirken, daß die Außenverzahnung entsprechend ihrer umlaufenden radialen Verformung jeweils nur über ein darin abwälzendes begrenztes Bogenstück mit der Innenverzahnung des Stützringes in Eingriff gerät. Die umlaufend radial verlagerbare Außenverzahnung kann unmittelbar an den Köpfen von T-förmigen Stößeln oder aber an einem über diese Köpfe umlaufenden Reifen (dem Flexband) ausgebildet sein; wobei in letzterem Falle das Innenrad auch stillstehen und dann sogar als bloßer Führungskäfig für darin vom Wellgenerator umlaufend radial verschiebbare Stößel ausgebildet sein kann.

Dokument DE 197 35 052 A1 offenbart ein Wellgetriebe gemäß dem Oberbegriff des Anspruchs 1.

Dieser Erfindung liegt die technische Problemstellung zugrunde, unter Beibehaltung seiner apparativen und anwendungsorientierten Vorteile das vorbekannte Wellgetriebe dahingehend weiterzuentwickeln, daß es nicht mehr erforderlich ist, eine externe Kupplung zum Unterbrechen des Kraftflusses vom Antriebsmotor auf die Abtriebswelle einzusetzen.

Die in den Hauptansprüchen gekennzeichnete Lösung erbringt den Vorteil, ohne besonderen apparativen Zusatzaufwand eine außerordentlich einfach und weich steuerbare Kupplungsfunktion direkt in das Wellgetriebe integriert, nämlich in seinen Wellgeneratör hinein verlegt zu haben, ohne dafür die radialen Abmessungen des Wellgetriebes vergrößern zu müssen.

Für diese Lösung ist von der Überlegung ausgegangen, daß nur der unrunde Triebkern des Wellgetriebes zum beschriebenen Abwälzen des Innenrades im Stützring führt. Deshalb ist erfindungsgemäß ein relativ zum Innenrad axial verlagerbarer Triebkem vorgesehen, der über einen Teil seiner axialen Länge einen unrunden (insbesondere im Axial-Querschnitt ovalen) hier sog. Trieb-Bereich aufweist, und über einen axial dagegen versetzten Teil seiner Länge einen Frei-Bereich mit rundem Axial-Querschnitt von einem Durchmesser, der nicht größer als der kleinere der beiden Durchmesser seines unrunden Bereiches ist. So kann dieser runde Bereich des Triebkernes in der Nabe des Innenrades durchdrehen, ohne die örtlich umlaufenden Radialbeanspruchungen für dessen Abwälzen im Stützring zur Folge zu haben. Deshalb schaltet die entsprechende Axialverlagerung des Triebkernes im Innenrad zwischen Drehbewegung und Stillstand der Innenrad-Außenverzahnung und somit auch des Abtriebsringes um.

Wenn ein gleitender Übergang zwischen diesen beiden Funktional-Bereichen unterschiedlicher Querschnittsgeometrie, also ein allmähliches ovales Aufweiten des Triebkernes vom runden Bereich her ausgebildet ist, stellt sich ein besonders weicher Schaltvorgang ein, weil der rotierende Triebkern nur allmählich mit seinem zunehmend unrunden Querschnitt in Eingriff mit dem radial zu verformenden Innenrad gerät. Der Freibereich hat in Bezug auf die axiale Dicke des darauf ruhenden Innenrades aber eine ausreichende axiale Länge für die Leerlauf-Stellung im Innenrad.

Für die Verschiebung des Triebkernes zum Einkuppeln und Auskuppeln der Kraftübertragung über das Wellgetriebe genügt es, vorzugsweise antriebsseitig, also beim angeflanschten Antriebsmotor, eine Schaltklaue anzuordnen, die z.B. neben dem Lagerbereich gabelförmig in eine umlaufende Nut im Triebkern eingreift. Somit ist für die Realisierung und Handhabung solch einer Leerlauf-Schaltkupplung mit konisch-unrundem Triebkern nur dieses eine zusätzliche Teil erforderlich.

Bezüglich sonstiger Vorteile, Merkmale und Weiterbildungen wird außer auf die weiteren Ansprüche auch auf nachstehende Beschreibung eines in der Zeichnung unter Beschränkung auf das Funktionswesentliche skizzierten bevorzugten Realisierugsbeispiels für einen Triebkem in einem erfindungsgemäßen, schaltenden Wellgetriebe verwiesen. In der Zeichnung zeigt :
- Fig.1: den Triebkern in schräger Ansicht und
- Fig.2: in abgebrochener Darstellung den Triebkem aus Fig.1 in Stirnansicht, in der Leerlauf-Stellung mit seinem runden Frei-Bereich die Nabe des Innenrades eines Wellgetriebe durchgreifend.

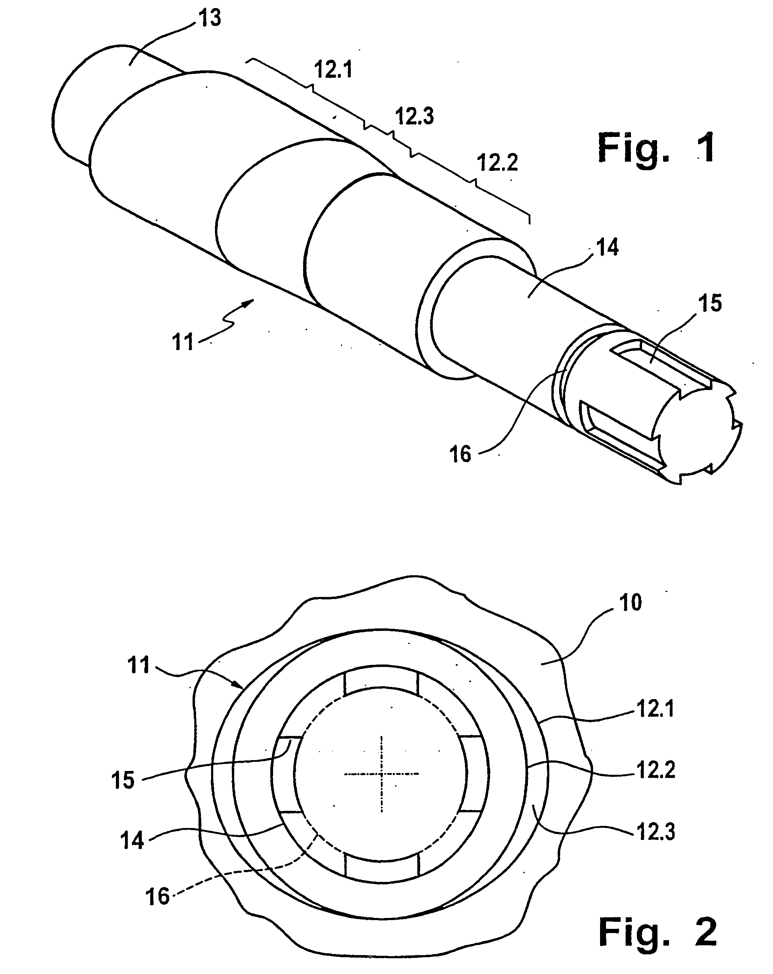

Wie in den einleitend behandelten Veröffentlichungen näher dargestellt, wird bei einem Wellgetriebe das radial verformbare Innenrad 10 (Fig.2) im formstabil hohlzylindrischen Stützring (hier nicht dargestellt) koaxial vom rotierenden unrunden Triebkern 11 des sogenannten Wellgenerators durchgriffen. An diesem Triebkem 11 ist nun, vgl. Fig.1, erfindungsgemäß gegenüber einem unrunden, insbesondere im Axial-Querschnitt ovalen Trieb-Bereich 12.1 axial versetzt ein im Querschnitt runder Freibereich 12.2 ausgebildet. Wie aus der Stimansicht der Fig.2 besser ersichtlich, entspricht der runde Durchmesser des Frei-Bereiches 12.2 dem kleineren der beiden Ellipsendurchmesser des Trieb-Bereiches 12.1. Deshalb kann der Triebkem ohne Radialbeanspruchung im Innenrad 10 frei durchdrehen, wenn der Triebkem 11 gemäß Fig.2 das Innenrad 10 gerade mit diesem Bereich 12.2 durchgreift. Wenn aber das Innenrad 10 relativ zum Triebkern 11 bis zum Trieb-Bereich 12.1 axial verschoben ist, dann erfährt das Innenrad 10 vom rotierenden Triebkern 11 seine umlaufende Radialverformung für das verlangsamte Abwälzen im Stützring.

Wenn der Übergang vom Frei-Bereich 12.2 zum Trieb-Bereich 12.1 nicht stufig ist, sondern dagegen wie in Fig.1 der Zeichnung angedeutet über einen konusähnlich sich aufweitenden bzw. verjüngenden Übergangs-Bereich 12.3 stetig verläuft, erzielt man mit der Axialverlagerung zwischen Innenrad 10 und Triebkern 11 ein gleitendes Ein- bzw. Ausgreifen des Trieb-Bereiches 12.1 in der Nabe des Innenrades 10 und so einen besonders sanften Schaltvorgang.

Außerhalb dieser einander (nicht unbedingt unmittelbar) benachbarten Funktional-Bereiche 12 ist der Triebkern 11 zu einem Lagerzapfen 13, der verdrehbar und längsverschiebbar in die Nabe des Abtriebsringes (nicht gezeichnet) eingreift, und zu einem weiteren Lagerzapfen 14 verjüngt, der ein stirnseitiges Lagerschild (nicht gezeichnet) des Wellgetriebes durchgreift. Dieser antriebsseitige Lagerzapfen 14 endet stimseitig in einem Anschlußprofil 15 für den formschlüssig drehfesten Eingriff in eine buchsenartige Stirnöffnung in der oder Kupplungshülse auf der Welle des hier an das Getriebe angeflanschten Antriebsmotors (nicht gezeichnet). Das achsparallele Anschlußprofil 15 erstreckt sich über wenigstens die Länge des Übergangs-Bereiches 12.3, also die Länge vom Anfang des Frei-Bereiches 12.2 bis zum Anfang des Trieb-Bereiches 12.1, so daß das antriebsseitige Stirnende des Triebkernes 11 mit seinem Anschlußbereich 15 kollisionsfrei in seiner Kopplung an den gerätefesten Antriebsmotor axialverlagert werden kann.

Für diese Axialverschiebung des Triebkemes 11, also für das Ein- und Auskuppeln im Innenrad 10, kann eine gerätefest schwenkbar gehalterte Schaltklaue (nicht gezeichnet) gabelförmig radial in eine umlaufende Nut 16 eingreifen, die beispielsweise wie dargestellt zwischen dem antriebsseitigen Lagezapfen 14 und dem Anschlußprofil 15 in den Triebkern 11 eingestochen ist.

So läßt sich erfindungsgemäß praktisch ohne apparativen Zusatzaufwand und ohne wesentliche Vergrößerung der Baumaße ein Wellgetriebe durch einen etwa konisch sich aufweitenden Triebkern 11, der zwischen einem verjüngten und insbesondere runden Frei-Bereich 12.2 und einem unrunden Trieb-Bereich 12.1 relativ zum Innenrad 10 axialverlagerbar ist, mit einer integrierten, weich schaltenden Leerlauf-Schaltkupplung ausstatten.

## Patentansprüche

1. Mit Leerlauf-Schaltkupplung bestücktes Wellgetriebe mit einem um seine Achse rotierenden Triebkem (11), dessen unrunder Querschnitt zum koaxialen Abwälzen des Radreifens eines ihn umgebenden, umlaufend radial verformbaren, insbesondere speichenradförmigen Innenrades (10) in einem formstabilen Stützring etwas größeren Durchmessers führt, **dadurch gekennzeichnet, daß** das Innenrad (10) und der Triebkern (11) relativ zueinander zwischen dem unrunden Trieb-Bereich (12.1) des Triebkerns (11) und einem dagegen axial versetzten, über wenigstens die axiale Dicke des Innenrades (10) im Axial-Querschnitt verjüngten Frei-Bereich (12.2) des Triebkerns (11) axial verlagerbar sind, wobei der Frei-Bereich (12.2) insbesonders rund sein kann.

2. Triebkern (11) für ein Wellgetriebe nach Anspruch 1, **dadurch gekennzeichnet, daß** an ihm neben einem unrunden, insbesondere elliptischen Axial-Querschnitt als Trieb-Bereich (12.1) ein verjüngter, insbesondere runder Frei-Bereich (12.2) ausgebildet ist.

3. Triebkern nach Anspruch 2, **dadurch gekennzeichnet, daß** der Frei-Bereich (12.2) sich wenigstens über die axiale Dicke des darauf getragenen Innenrades (10) erstreckt.

4. Triebkern nach Anspruch 2 oder 3, **dadurch gekennzeichnet, daß** sich zwischen den Triebund Frei-Bereichen (12.1, 12.2) ein Übergangs-Bereich (12.3) erstreckt, in dem der Querschnitt stetig zwischen dem verjüngten des Frei-Bereiches (12.2) und dem unrunden des Trieb-Bereiches (12.1) variiert.

5. Triebkern nach einem der vorangehenden Ansprüche ab Anspruch 2, **dadurch gekennzeichnet, daß** sich beiderseits der Funktional-Bereiche (12) Lagerzapfen (13, 14) anschließen.

6. Triebkern nach einem der vorangehenden Ansprüche ab Anspruch 2, **dadurch gekennzeichnet, daß** sich an einen der Lagerzapfen (13, 14) eine umlaufende Nut (16) zum Eingriff einer Schaltklaue für eine Axialverlagerung des Triebkernes (11) anschließt.

7. Triebkern nach einem der vorangehenden Ansprüche ab Anspruch 2, **dadurch gekennzeichnet, daß** sich an einen antriebsseitigen Lagerzapfen (14) ein Anschlußprofil (15) für die Welle eines Antriebsmotors anschließt.

8. Triebkern nach dem vorangehenden Anspruch, **dadurch gekennzeichnet, daß** die axiale Länge des Anschlußprofiles (15) wenigstens der Länge der axialen Verlagerung des Innenrades (10) zwischen Trieb-Bereich (12.1) und Frei-Bereich (12.2) entspricht.

## Claims

1. A shaft transmission equipped with a neutral clutch having a drive core (11) revolving about its axis, whose non-circular cross-section results in coaxial seesawing of the tyre of a surrounding inner wheel (10) that is radially deformable on its circumference and is more specifically shaped like a spoke wheel in a support ring that has a stable shape and a slightly greater diameter, **characterized in that** the inner wheel (10) and the drive core (11) are axially displaceable relative to one another between the non-circular drive region (12.1) of the drive core (11) and a free region (12.2) that is axially offset thereto and has an axial cross-section tapering over at least the axial thickness of the inner wheel (10), wherein said free region (12.2) may more specifically be round.

2. A drive core (11) for a shaft transmission in accordance with claim 1, **characterized in that** a tapered, more specifically round free region (12.2) is configured on said drive core next to a non-circular, more specifically elliptical axial cross-section as the drive region (12.1).

3. The drive core in accordance with claim 2, **characterized in that** the free region (12.2) extends over at least the axial thickness of the inner wheel (10) carried thereon.

4. The drive core in accordance with claim 2 or 3, **characterized in that** a transition region (12.3) extends between the drive region and the free region (12.1, 12.2), the cross-section thereof varying constantly between the tapered cross-section of the free region (12.2) and the non-circular cross-section of the drive region (12.1).

5. The drive core in accordance with any one of the afore mentioned claims from claim 2 onwards, **characterized in that** the functional regions (12) are adjoined on either side with journals (13, 14).

6. The drive core in accordance with any one of the afore mentioned claims from claim 2 onwards, **characterized in that** one of the journals (13, 14) is adjoined with a perimeter groove (16) for engagement with a shifting claw for axial displacement of the drive core (11).

7. The drive core in accordance with any one of the afore mentioned claims from claim 2 onwards, **characterized in that** a journal (14) located on the drive side is adjoined with a connection profile (15) for the shaft of a drive motor.

8. The drive core in accordance with the afore mentioned claim, **characterized in that** the axial length of the connection profile (15) corresponds to at least the length of the axial displacement of the inner wheel (10) between the drive region (12.1) and the free region (12.2).

## Revendications

1. Système de transmission par arbre équipé d'un variateur de ralenti avec un noyau d'entraînement (11) dont la section non circulaire provoque la rotation coaxiale irrégulière du pneu d'une roue interne (10) notamment conformée en forme de roue à rayons qui l'entoure et qui est déformable radialement sur son pourtour au sein d'un anneau de support bénéficiant d'une bonne mémoire de forme et doté d'un diamètre légèrement supérieur, **caractérisé en ce que** la roue interne (10) et le noyau d'entraînement (11) sont déplaçables l'un par rapport à l'autre suivant la direction axiale entre la zone d'entraînement (12.1) non circulaire du noyau d'entraînement (11) et une zone libre (12.2) décalée axialement par rapport à celle-ci et dont la section axiale va s'amincissant sur l'épaisseur axiale au moins de la roue interne (10), la zone libre (12.2) pouvant notamment être ronde.

2. Noyau d'entraînement (11) pour un système de transmission par arbre selon la revendication 1, **caractérisé en ce qu'**une zone libre (12.2) notamment ronde et qui va s'amincissant est conformée sur celui-ci à côté d'une section axiale non circulaire, notamment elliptique faisant office de zone d'entraînement (12.1).

3. Noyau d'entraînement selon la revendication 2, **caractérisé en ce que** la zone libre (12.2) s'étend sur au moins l'épaisseur axiale de la roue interne (10) qu'elle supporte.

4. Noyau d'entraînement selon la revendication 2 ou 3, **caractérisé en ce qu'**une zone de transition (12.3) s'étend entre la zone d'entraînement et la zone libre (12.1, 12.2), la section de la zone de transition variant de façon continue entre la section allant s'amincissant de la zone libre (12.2) et la section non circulaire de la zone d'entraînement (12.1).

5. Noyau d'entraînement selon l'une quelconque des revendications précédentes à compter de la revendication 2, **caractérisé en ce que** des tourillons (13, 14) sont situés dans le prolongement des zones fonctionnelles (12) de part et d'autre de celles-ci.

6. Noyau d'entraînement selon l'une quelconque des revendications précédentes à compter de la revendication 2, **caractérisé en ce qu'**une rainure circulaire (16) est contiguë à un des tourillons (13, 14) et est destinée à se mettre en prise avec une griffe d'accouplement pour le déplacement axial du noyau d'entraînement (11).

7. Noyau d'entraînement selon l'une quelconque des revendications précédentes à compter de la revendication 2, **caractérisé en ce qu'**un profilé de raccordement (15) pour le raccordement de l'arbre d'un moteur d'entraînement est prévu dans le prolongement d'un tourillon (14) se situant du côté de l'entraînement.

8. Noyau d'entraînement selon la revendication précédente, **caractérisé en ce que** la longueur axiale du profilé de raccordement (15) correspond au moins à la longueur du déplacement axial de la roue interne (10) entre la zone d'entraînement (12.1) et la zone libre (12.2).
